# EUROPEAN PATENT APPLICATION

(11) **EP 4 834 762 A1**
(43) Date of publication of application: **04.11.2026**
(21) Application number: 23963137.7
(22) Date of filing: 27.12.2023
(51) Int. Cl.: B64D 1/18, B64U 10/14, B64U 40/00, B64U 101/40

(54) **CHEMICAL SPRAYING SYSTEM**

(71) Applicant: KUBOTA CORPORATION, Osaka-shi, Osaka 530-0011 (JP)
(72) Inventor: OKAMOTO Asako, Sakai-shi, Osaka 590-0908 (JP)
(74) Representative: Cabinet Beau de Loménie
(86) International application number: PCT/JP2023/046992
(87) International publication number: WO 2025/141788

(57) **Abstract**

A chemical spraying system includes: at least one unmanned aerial vehicle 1 including a chemical spraying device 3; and a control device 11 configured to control the at least one unmanned aerial vehicle 1, wherein the control device 11 includes: an acquisition unit 12 configured to acquire environment information 30 indicating an environment of the work target region; a first flight control unit 14 configured to cause the at least one unmanned aerial vehicle 1 to perform a work flight with a first work flight behavior; and a second flight control unit 15 configured to determine a second work flight behavior, based on the environment information 30, and cause the at least one unmanned aerial vehicle to perform a work flight with the second work flight behavior.

## Description

### Technical Field

The present invention relates to a chemical spraying system that causes an unmanned aerial vehicle to spray a chemical to a work target region.

### Background Art

Patent Document 1 discloses a flight planning device for an unmanned helicopter. The flight planning device uses GPS to set a flight area and a flight route that are as accurate as possible, and a chemical is sprayed by flying the unmanned helicopter over the flight area along the flight route set by the flight planning device, thereby preventing the chemical from being sprayed outside the area.

### Prior Art Document

### Patent Document

Patent Document 1: JP2002-211494 A

### Disclosure of the Invention

### Problem to be Solved by the Invention

The flight planning device described in Patent Document 1 does not acquire environment information (e.g., the wind condition, the chemical spraying status, a record of past chemical spraying, etc.) in the flight area to set a flight route suitable for the environment of the flight area.

For example, in a case where the sprayed chemical is blown by the wind, the sprayed chemical may not be successfully sprayed to a region assumed in advance.

It is an object of the present invention to provide a chemical spraying system that facilitates spraying of an appropriate amount of a chemical to a work target region.

### Means for Solving Problem

A work vehicle according to the present invention is a chemical spraying system configured to cause at least one unmanned aerial vehicle to spray a chemical to a work target region, the chemical spraying system including: the at least one unmanned aerial vehicle including a chemical spraying device; and a control device configured to control the at least one unmanned aerial vehicle, wherein the control device includes: an acquisition unit configured to acquire environment information indicating an environment of the work target region; a first flight control unit configured to cause the at least one unmanned aerial vehicle to perform a work flight with a first work flight behavior; and a second flight control unit configured to determine a second work flight behavior, based on the environment information, and cause the at least one unmanned aerial vehicle to perform a work flight with the second work flight behavior.

According to the present invention, the second work flight behavior of the unmanned aerial vehicle is determined based on the environment information after the unmanned aerial vehicle has been caused to perform a work flight with the first work flight behavior. This makes it possible to determine the work flight behavior for spraying an appropriate amount of the chemical to the work target region according to the environment of the work target region. Accordingly, an appropriate amount of the chemical is readily sprayed to the work target region.

In the present invention, it is preferable that the first flight control unit operates the chemical spraying device while flying the at least one unmanned aerial vehicle along a first path as the first work flight behavior, and the second flight control unit generates, based on the environment information, a second path as the second work flight behavior in such a manner as to be different from the first path, and operates the chemical spraying device while flying the at least one unmanned aerial vehicle along the second path.

According to the present invention, the second path of the unmanned aerial vehicle is generated based on the environment information in such a manner as to be different from the first path after the unmanned aerial vehicle has been flown along the first path. This makes it possible to generate the path for the unmanned aerial vehicle for spraying an appropriate amount of the chemical to the work target region according to the environment of the work target region. Accordingly, an appropriate amount of the chemical is readily sprayed to the work target region.

In the present invention, it is preferable that the first flight control unit operates the chemical spraying device, based on a first spray mode as the first work flight behavior, while flying the at least one unmanned aerial vehicle along a first path as the first work flight behavior, and the second flight control unit generates, based on the environment information, a second spray mode as the second work flight behavior in such a manner as to be different from the first spray mode, and operates the chemical spraying device, based on the second spray mode, while flying the at least one unmanned aerial vehicle along a second path as the second work flight behavior.

According to the present invention, the second spray mode of the chemical spraying device is generated based on the environment information in such a manner as to be different from the first spray mode after the chemical spraying device has been operated based on the first spray mode while flying the unmanned aerial vehicle along the first path. This makes it possible to generate the spray mode of the chemical spraying device for spraying an appropriate amount of the chemical to the work target region according to the environment of the work target region. Accordingly, an appropriate amount of the chemical is readily sprayed to the work target region.

In the present invention, it is preferable that the first flight control unit operates the chemical spraying device, based on a first spray mode as the first work flight behavior, while flying the at least one unmanned aerial vehicle along a first path as the first work flight behavior, and the second flight control unit: generates, based on the environment information, a second path as the second work flight behavior in such a manner as to be different from the first path; generates, based on the environment information, a second spray mode as the second work flight behavior in such a manner as to be different from the first spray mode; and operates the chemical spraying device, based on the second spray mode, while flying the at least one unmanned aerial vehicle along the second path.

According to the present invention, it is possible to generate the flight path of the unmanned aerial vehicle and the spray mode of the chemical spraying device according to the environment of the work target region, thus allowing the unmanned aerial vehicle to readily spray an appropriate amount of the chemical to the work target region.

In the present invention, it is preferable that the acquisition unit acquires, as the environment information, at least one of: a wind condition in the work target region; a terrain of a surrounding area of the work target region; a result of past chemical spraying in the work target region; and a result of past chemical spraying in the surrounding area of the work target region.

According to the present invention, the acquisition unit can acquire information necessary to determine the work flight behavior of the unmanned aerial vehicle according to the environment of the work target region.

In the present invention, it is preferable that the control device includes a third flight control unit configured to determine a third work flight behavior, based on the environment information, and cause the at least one unmanned aerial vehicle to perform a work flight with the third work flight behavior.

According to the present invention, it is possible to determine the third work flight behavior of the unmanned aerial vehicle according to the environment of the work target region, thus allowing the unmanned aerial vehicle to readily spray an appropriate amount of the chemical to the work target region.

In the present invention, it is preferable that the at least one unmanned aerial vehicle includes a first unmanned aerial vehicle and a second unmanned aerial vehicle, the first flight control unit causes the first unmanned aerial vehicle to perform a work flight with the first work flight behavior, and the second flight control unit causes the second unmanned aerial vehicle to perform a work flight with the second work flight behavior.

According to the present invention, it is possible to increase the work efficiency of chemical spraying by causing the first unmanned aerial vehicle to perform a work flight with the first work flight behavior and causing the second unmanned aerial vehicle to perform a work flight with the second work flight behavior, than by causing one unmanned aerial vehicle to perform a work flight.

### Brief Description of the Drawings

FIG. 1 is a block diagram showing a chemical spraying system.
FIG. 2 is a diagram showing a spray map showing a first work flight behavior.
FIG. 3 is a diagram showing a spray map showing the first work flight behavior.
FIG. 4 is a diagram showing a spray map showing a second work flight behavior.
FIG. 5 is a diagram showing a spray map showing the second work flight behavior.
FIG. 6 is a diagram showing a spray map showing a third work flight behavior.
FIG. 7 is a diagram showing a spray map showing the third work flight behavior.
FIG. 8 is a flowchart showing the chemical spraying system.

### Best Mode for Carrying out the Invention

A chemical spraying system according to the present invention will be described below with reference to the drawings.

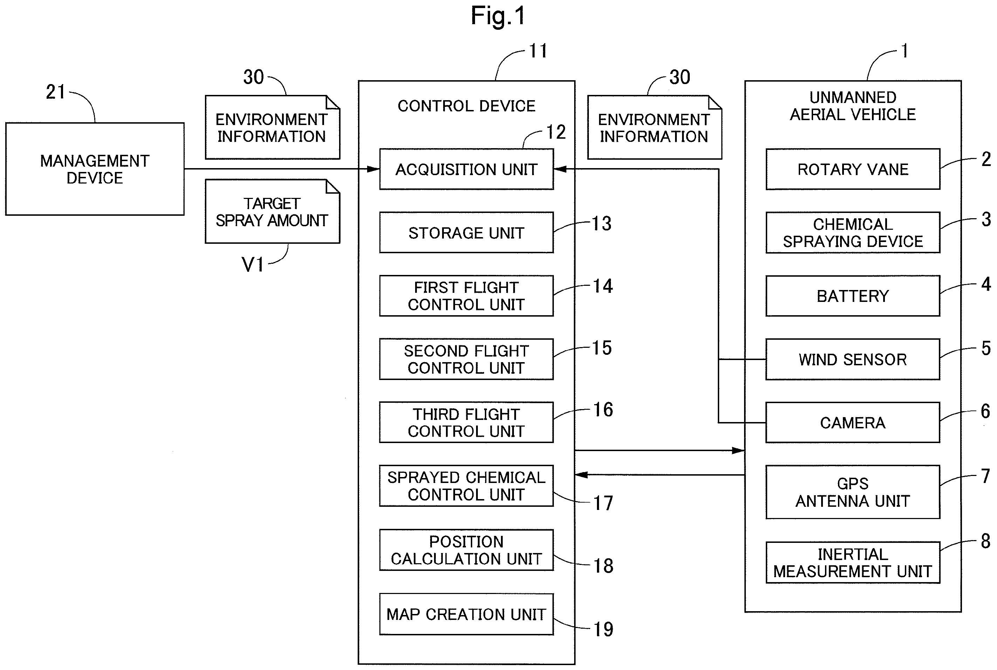

As shown in FIG. 1, the chemical spraying system includes an unmanned aerial vehicle 1 including a chemical spraying device 3, a control device 11 that controls the unmanned aerial vehicle 1, and a management device 21. The chemical spraying system is a system that causes the unmanned aerial vehicle 1 to spray a chemical to a work target region E.

A chemical refers to a liquid or a solid that is sprayed to the work target region E, including, for example, an agricultural chemical, a herbicide, a fertilizer, and a pesticide.

The work target region E refers to a region to which the unmanned aerial vehicle 1 sprays a chemical. The work target region E may be a field, a region or a forest in the surrounding area of the field, or the like.

The chemical spraying system according to the present embodiment causes the unmanned aerial vehicle 1 to perform a plurality of work flights. A work flight refers to the unmanned aerial vehicle 1 performing an operation of spraying a chemical while flying over the work target region E. That is, in the present embodiment, a plurality of work flights are performed for the whole or part of the work target region E. As a result of the plurality of work flights, a predetermined amount (target spray amount V1) of a chemical is sprayed to the work target region E.

In the following description, a work flight on the first time is referred to as a first work flight. A path and a spray mode of the first work flight are referred to as a first path R1 and a first spray mode, which are collectively referred to as a first work flight behavior. A work flight on the second time is referred to as a second work flight. A path and a spray mode of the second work flight are referred to as a second path R2 and a second spray mode, which are collectively referred to as a second work flight behavior. The same applies to a work flight on the third and subsequent times.

A work flight behavior refers to a behavior of the unmanned aerial vehicle 1 when performing a work flight. In the present embodiment, the work flight behavior is a path along which the unmanned aerial vehicle 1 flies, or a spray mode of the chemical spraying device 3. The present invention is not limited thereto, and the work flight behavior may include a spray mode of the chemical spraying device 3, the height from the work target region E over which the unmanned aerial vehicle 1 flies, the speed at which the unmanned aerial vehicle 1 flies, and so forth.

In the present embodiment, a spray mode of the chemical spraying device 3 refers to an operation of the chemical spraying device 3 that is performed by on-off control by the control device 11. That is, the control device 11 performs, as a spray mode of the chemical spraying device 3, control to spray a chemical by operating the chemical spraying device 3, or not to spray a chemical by not operating the chemical spraying device 3. The spray mode of the chemical spraying device 3 may include a spraying speed (spray amount per unit time), the type and the concentration of a chemical to be sprayed, and the so forth.

The management device 21 is provided outside the unmanned aerial vehicle 1. The management device 21 includes a storage unit, and a CPU that executes a program. The storage unit is configured, for example, by an HDD, a ROM, a nonvolatile memory, or the like. The management device 21 is capable of transmitting and receiving information to and from the control device 11 via wired communication or wireless communication. The management device 21 stores environment information 30, which is information indicating an environment of the work target region E, a target spray amount V1 of a chemical in the work target region E, and so forth.

The target spray amount V1 is a spray amount of a chemical per predetermined area that is set in advance. For example, the target spray amount V1 is a spray amount (kg) of a chemical per 10 ares. The present invention is not limited thereto, and the target spray amount V1 can be freely set.

The unmanned aerial vehicle 1 is an aerial vehicle capable of autonomous flight. The unmanned aerial vehicle 1 is an unmanned aircraft that cannot be boarded by a person due to its structure. In the present embodiment, the unmanned aerial vehicle 1 is a drone including a plurality of rotary vanes 2. The unmanned aerial vehicle 1 is capable of transmitting and receiving information to and from the control device 11 via wired communication or wireless communication. The present invention is not limited thereto, and the unmanned aerial vehicle 1 may be an unmanned helicopter.

The control device 11 includes a storage unit 13, and a CPU that executes a program. The storage unit 13 is configured, for example, by an HDD, a ROM, a nonvolatile memory, or the like. In the present embodiment, the control device 11 is provided in the unmanned aerial vehicle 1.

As shown in FIG. 1, the control device 11 includes an acquisition unit 12 configured to acquire environment information 30, a first flight control unit 14 configured to cause the unmanned aerial vehicle 1 to perform a work flight with a first work flight behavior, a second flight control unit 15 configured to determine a second work flight behavior, based on the environment information 30, and cause the unmanned aerial vehicle 1 to perform a work flight with the second work flight behavior, and a third flight control unit 16 configured to determine a third work flight behavior, based on the environment information 30, and cause the unmanned aerial vehicle to perform a work flight with the third work flight behavior.

The environment information 30 includes the wind condition (e.g., the wind direction and the wind velocity) in the work target region E, the chemical spraying status, terrain data of the work target region E, terrain data of the surrounding area of the work target region E, a result of past chemical spraying in the work target region E, a result of past chemical spraying in the surrounding area of the work target region E, and so forth.

In the present embodiment, the acquisition unit 12 acquires, as the environment information 30, the wind condition (e.g., the wind direction, the wind velocity, etc.) in the work target region E and a chemical spraying status from a wind sensor 5 and a camera 6 of the unmanned aerial vehicle 1. In addition, the acquisition unit 12 acquires, as the environment information 30, terrain data of the surrounding area of the work target region E, a result of past chemical spraying in the work target region E, and a result of past chemical spraying in the surrounding area of the work target region E from the management device 21.

### Unmanned Aerial Vehicle

As shown in FIG. 1, the unmanned aerial vehicle 1 includes a battery 4, a wind sensor 5, a camera 6, a GPS antenna unit 7, and an inertial measurement unit 8.

The power of the battery 4 is supplied to a motor provided in each of the rotary vanes 2. Each rotary vane 2 is driven around an axis extending in the up-down direction. The unmanned aerial vehicle 1 is flown by the driving of the plurality of rotary vanes 2. The present invention is not limited thereto, and the rotary vanes 2 may be driven by the power of an engine.

The wind sensor 5 is capable of detecting a wind direction and a wind velocity. A signal output from the wind sensor 5 is output to the acquisition unit 12 as the environment information 30.

The camera 6 is capable of capturing an image of the chemical spraying device 3 and an image of a chemical sprayed from the chemical spraying device 3. An image captured by the camera 6 is output to the acquisition unit 12 as the environment information 30. In the present embodiment, the image is a still image. The present invention is not limited thereto, and the image may be a moving image or video that continuously displays still images.

The GPS antenna unit 7 receives a positioning signal from an artificial satellite used in a global navigation satellite system (GNSS, including, for example, GPS, QZSS, Galileo, GLONASS, BeiDou, etc.). The positioning signal is output to the acquisition unit 12.

The inertial measurement unit 8 detects inertial information (a yaw angle, a pitch angle, a roll angle, etc.) of the unmanned aerial vehicle 1. The inertial information is output to the acquisition unit 12.

The chemical spraying device 3 includes a container containing a chemical, a nozzle for spraying the chemical contained in the container, and a pump for sending the chemical from the container to the nozzle.

### Control Device

As shown in FIG. 1, the control device 11 includes a sprayed chemical control unit 17, a position calculation unit 18, and a map creation unit 19.

The position calculation unit 18 generates positioning data indicating the position of the unmanned aerial vehicle 1 in the work target region E, based on the inertial information of the unmanned aerial vehicle 1, and the position signal of the unmanned aerial vehicle 1.

The sprayed chemical control unit 17 calculates, based on the target spray amount V1 of the chemical and the environment information 30, a work spray amount V2 to be sprayed per unit area by the chemical spraying device 3 in a single work flight. For example, the work spray amount V2 is a spray amount (kg) of the chemical per 10 ares. The present invention is not limited thereto, and the sprayed chemical control unit 17 may calculate the concentration of the chemical to be sprayed by the chemical spraying device 3.

The work spray amount V2 varies depending on the number X of work flights performed by the unmanned aerial vehicle 1. Specifically, the work spray amount V2 is calculated based on the following equation (1):$Work spray amount V 2 = Target spray amount V 1 / \times Number X$ (1)

In the above equation (1), the number X is 2 or more. In the present embodiment, the number X is 3. The present invention is not limited thereto, and the number X may be 4 or more.

Note that the sprayed chemical control unit 17 may be configured to determine the number X of work flights, based on the environment information 30. For example, the sprayed chemical control unit 17 increases the value of the number X as the wind velocity (or the change in wind direction) in the work target region E increases. Consequently, the work spray amount V2 is reduced.

The sprayed chemical control unit 17 calculates an effective spray amount V3, based on a signal input from the wind sensor 5, an image input from the camera 6, and positioning data of the unmanned aerial vehicle 1. The effective spray amount V3 is the actual chemical spraying status (spray result) by a single work flight. Preferably, the effective spray amount V3 is a spray amount for each position of the work target region E, and a spray amount for each small plot obtained by dividing the work target region E. In a case where the wind is blowing, the sprayed chemical is blown by the wind. Accordingly, the chemical is blown by the wind, and sprayed to a position that is not directly below the chemical spraying device 3. The sprayed chemical control unit 17 estimates the wind velocity and the wind direction using at least one of the signal input from the wind sensor 5 and the image input from the camera 6, and calculates the position at every instant (flight history) of the unmanned aerial vehicle 1 from the positioning data, and calculates the position to which the chemical was actually sprayed, and the spray amount of the chemical as the effective spray amount V3.

The map creation unit 19 creates a spray map M showing a result of spraying the chemical in the work target region E, based on the effective spray amount V3. The spray map M shows the effective spray amount V3. Preferably, the spray map M shows an accumulated value of the effective spray amount V3, or in other words, the total amount of the chemical sprayed in the work target region E by a plurality of work flights.

The first flight control unit 14, the second flight control unit 15, and the third flight control unit 16 each determine a work flight behavior (a path and a spray mode) of the unmanned aerial vehicle 1, and cause the unmanned aerial vehicle 1 to perform a work flight with the determined work flight behavior.

### Control of Work Flight of Unmanned Aerial Vehicle

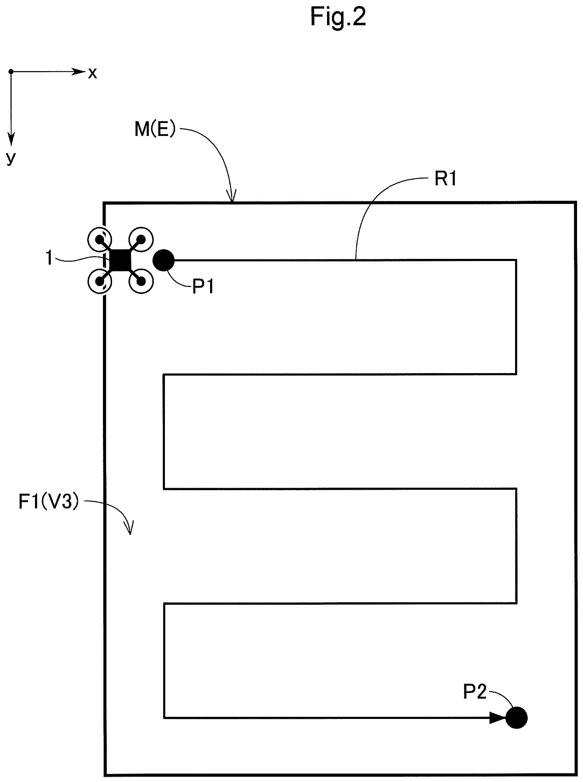

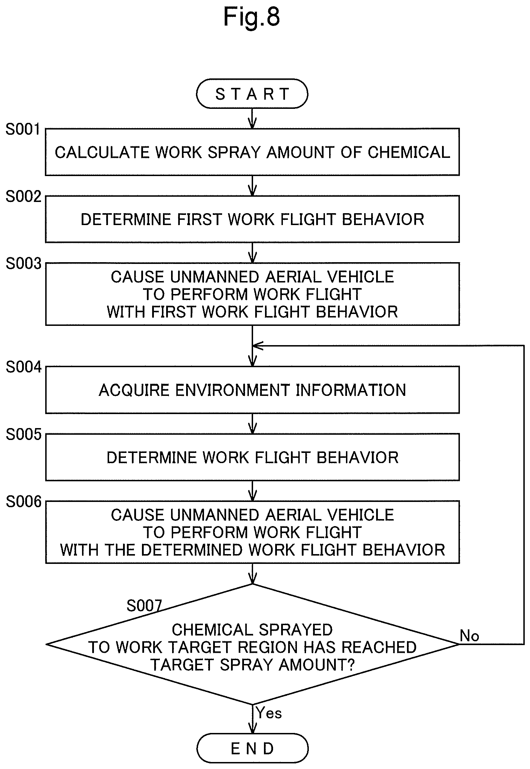

Control of the work flight of the unmanned aerial vehicle 1 will be described with reference to FIGS. 2 to 7, and the flowchart shown in FIG. 8. Note that, as long as no inconsistency arises, the order of the steps described below may be changed, or a plurality of the steps may be performed simultaneously.

In the example described below, the work target region E is a rectangular field. In addition, the flight speed of the unmanned aerial vehicle 1 and the height from the work target region E over which the unmanned aerial vehicle 1 flies are constant. In FIGS. 2 to 7, the longitudinal direction (the up-down direction in the drawings) of the field is referred to as a y direction, the same direction as the arrow is referred to as a +y direction, and a direction opposite to the arrow is referred to as a -y direction. In the drawings, the transverse direction (the left-right direction) of the field is referred to as an x direction, the same direction as the arrow is referred to as a +x direction, and a direction opposite to the arrow is referred to as a -x direction. For the sake of description, the field is divided in the y direction, and the divided regions are referred to as regions E1, E2, E3, E4, and E5 in this order in the +y direction.

As shown in FIG. 8, first, the sprayed chemical control unit 17 calculates the work spray amount V2 (step S001).

### Work Flight on First Time

The map creation unit 19 creates a spray map M. FIG. 2 is a spray map M when the unmanned aerial vehicle 1 is located at P1. FIG. 2 shows a region F1 as the effective spray amount V3. In the present embodiment, the region F1 indicates a region in which the effective spray amount V3 is 0% relative to the target spray amount V1. FIG. 2 shows a state prior to execution of the work flight on the first time, and therefore the effective spray amount V3 is zero in the entire work target region E, and the entire work target region E is constituted by the region F1.

The first flight control unit 14 determines a first flight behavior (step S002). Specifically, the first flight control unit 14 generates a first path R1 from the point P1, at which the unmanned aerial vehicle 1 is located, to a point P2. In addition, the first flight control unit 14 determines a first flight mode in such a manner as to spray a chemical during the flight along the first path R1. In FIG. 2, the spray map M shows the position of the unmanned aerial vehicle 1, and the generated first path R1. In the present embodiment, the spray width of the chemical by the unmanned aerial vehicle 1 is 4 to 10 m.

The first flight control unit 14 causes the unmanned aerial vehicle 1 to perform the work flight on the first time (first work flight). That is, the first flight control unit 14 operates the chemical spraying device 3 while flying the unmanned aerial vehicle 1 along the first path R1 as the first work flight behavior (step S003).

Specifically, the first flight control unit 14 flies the unmanned aerial vehicle 1 straight in the X direction from the point P1. Next, the first flight control unit 14 turns the unmanned aerial vehicle 1 by 90 degrees from the X direction to the Y direction. Next, the first flight control unit 14 flies the unmanned aerial vehicle 1 straight in the Y direction. Next, the first flight control unit 14 turns the unmanned aerial vehicle 1 by 90 degrees from the Y direction to the X direction. By repeating this operation, the unmanned aerial vehicle 1 performs a work flight from the point P1 to the point P2.

The acquisition unit 12 acquires the environment information 30 (step S004). Specifically, during execution of the first work flight, the acquisition unit 12 acquires, as the environment information 30, the wind condition in the work target region E, and the image input from the camera 6. Here, the region in which the chemical is sprayed may change depending on a change in the wind condition in the work target region E. This results in variations in the effective spray amount V3 in the work target region E.

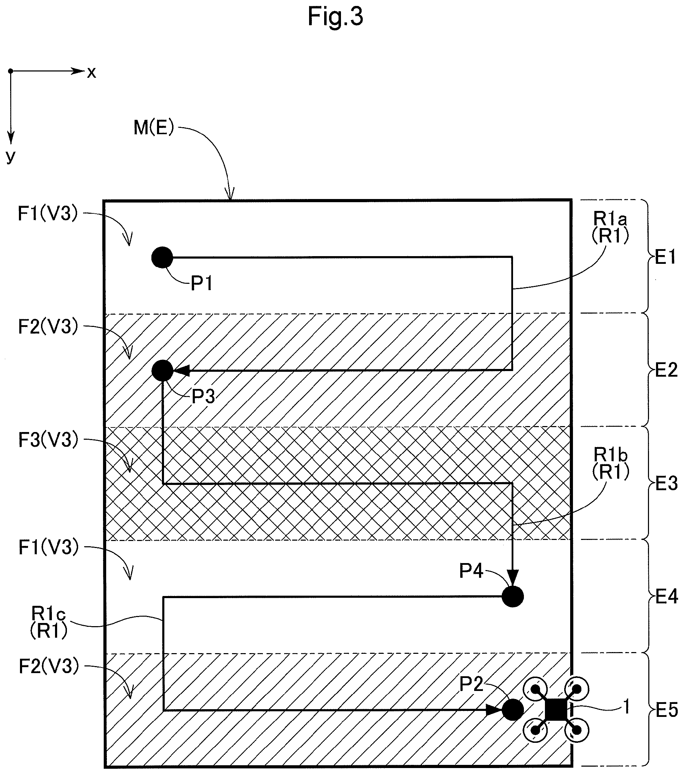

FIG. 3 shows a spray map M when the unmanned aerial vehicle 1 is located at P2 after the first work flight has finished. FIG. 3 shows a region F2 and a region F3 as the effective spray amount V3. In the present embodiment, the region F2 indicates a region in which the effective spray amount V3 is about 50% relative to the target spray amount V1. The region F3 indicates a region in which the effective spray amount V3 is about 100% relative to the target spray amount V1. The present invention is not limited thereto, and the proportion of the effective spray amount V3 indicated by the region F2 or the region F3 to the target spray amount V1 may be set freely.

The sprayed chemical control unit 17 calculates the effective spray amount V3 of the first work flight, based on the environment information 30. Then, the map creation unit 19 updates the spray map M, based on the calculated effective spray amount V3.

This will be described in detail. Assume that the wind blows in the +y direction while the unmanned aerial vehicle 1 is performing a work flight along a path R1a from the point P1 to a point P3. Then, the chemical sprayed during the flight along the path R1a is blown in the +y direction by the wind, and is sprayed to a region that is displaced in the +y direction relative to the path R1a. Specifically, the chemical sprayed during the flight in the region E1 is sprayed to the region E2. The chemical sprayed during the flight in the region E2 is sprayed to the region E3. As a result of the flight along the path R1a, the effective spray amount V3 in the region E1 is 0% (no chemical is sprayed), and the effective spray amount V3 of each of the regions E2 and E3 is 50%.

Assume that the wind weakens upon the unmanned aerial vehicle 1 reaching the point P3, and this state continues until the unmanned aerial vehicle 1 reaches a point P4. Then, the chemical sprayed during the flight along a path R1b will not be blown by the wind, and is sprayed along the path R1b. That is, the chemical is sprayed to the region E3 by the work flight along the path R1b. Then, the chemical is sprayed twice to the region E3, and therefore the effective spray amount V3 of the region E3 is 100%.

Assume that the wind blows in the +y direction also while the unmanned aerial vehicle 1 is performing a work flight along a path R1c from the point P4 to the point P2. The chemical sprayed during the flight along the path R1c is blown in the +y direction by the wind, and is sprayed to a region displaced in the +y direction relative to the path R1c. Specifically, the chemical sprayed during the flight in the region E4 is sprayed to the region E5. The chemical sprayed during the flight in the region E5 is sprayed to a region located on the +y side relative to the region E5 (i.e., outside the field). As a result of the flight along the path R1c, the effective spray amount V3 in the region E4 is 0% (no chemical is sprayed), and the effective spray amount V3 in the region E5 is 50%.

In the above-described manner, the sprayed chemical control unit 17 calculates the effective spray amount V3 of the first work flight, based on the environment information 30. Then, the map creation unit 19 updates the spray map M, based on the calculated effective spray amount V3. FIG. 3 shows a spray map M that has been updated based on the result of the first work flight. Each of the regions E1 and E4 is a region in which the effective spray amount V3 is 0%, and has become the region F1. Each of the regions E2 and E5 is a region in which the effective spray amount V3 is 50%, and has become the region F2. The region E3 is a region in which the effective spray amount V3 is 100%, and has become the region F3.

In the present embodiment, the sprayed chemical control unit 17 sets the work spray amount V2 to be smaller than the target spray amount V1, based on the target spray amount V1 of the chemical and the environment information 30. This suppresses the chemical from being sprayed by the work flight on the first time in an amount exceeding the target spray amount V1.

### Work Flight on Second Time

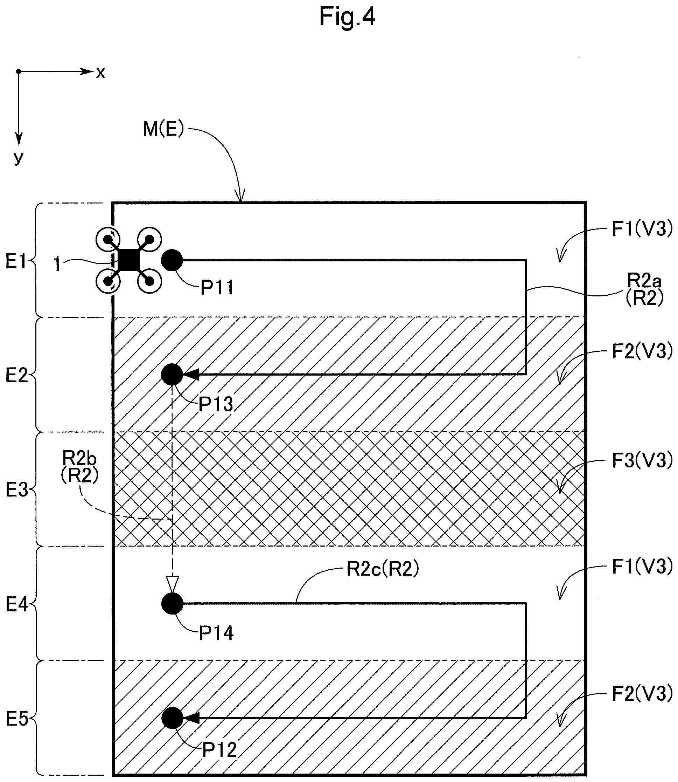

FIG. 4 shows a spray map M when the unmanned aerial vehicle 1 is located at P11 before the start of the work flight on the second time. The second flight control unit 15 calculates the wind velocity and the wind direction in the work target region E, based on the signal from the wind sensor 5.

The second flight control unit 15 determines a second flight behavior (step S005). More specifically, the second flight control unit 15 determines the second work flight behavior, based on the current wind status and the spray map M. Since the spray map M reflects the wind velocity and the wind direction during the first work flight, it can be said that the second work flight behavior is determined based on the environment information 30.

This will be described in detail. The second flight control unit 15 generates a second path R2 from the point P11 to a point P12. In FIG. 4, the spray map M shows the position of the unmanned aerial vehicle 1, and the generated second path R2.

The second flight control unit 15 determines, based on the environment information 30, the current wind condition, or in other words, the wind condition at the start of the second work flight. Assume that no wind is currently blowing. Then, the chemical sprayed from the chemical spraying device 3 is sprayed to a region to which spraying has been performed. In this case, the second flight control unit 15 determines the second flight behavior (i.e., the second path R2 and a second spray behavior) in such a manner that the chemical is sprayed to a region in which the effective spray amount V3 has not reached 100%.

The effective spray amount V3 in the region E1 is 0%, and the effective spray amount V3 in the region E2 is 50%. Accordingly, the second flight control unit 15 generates a path R2a from the point P11 to a point P13 in such a manner as to pass through the region E1 and the region E2. Note that the second flight control unit 15 determines the second spray mode in such a manner as to spray the chemical during the flight along the path R1a.

Since the effective spray amount V3 in the region E3 is 100%, there is no need to spray the chemical to the region E3. Accordingly, the second flight control unit 15 generates a path R2b from the point P13 to a point P14 in such a manner as to skip the region E3. Note that the second flight control unit 15 determines the second spray mode in such a manner as not to spray the chemical during the flight along the path R1b.

The effective spray amount V3 in the region E4 is 0%, and the effective spray amount V3 in the region E5 is 50%. Accordingly, the second flight control unit 15 generates a path R2c from the point P14 to the point P12 in such a manner as to pass through the region E4 and the region E5. Note that the second flight control unit 15 determines the second spray mode in such a manner as to spray the chemical during the flight along the path R1c.

Note that, in a case where the environment information 30 indicates that the wind is currently blowing, or in other words, the wind is blowing at the start of the second work flight, the second flight control unit 15 determines the second path R2 and the second spray mode in such a manner that the chemical is sprayed to a region in which the effective spray amount V3 has not reached 100%. For example, in a case where the wind is blowing in the +y direction, a path is generated on the -y side relative to the second path R2 shown in FIG. 3.

In this manner, the second flight control unit 15 determines the second work flight behavior in such a manner as to be different from the first work flight behavior, based on the environment information 30 (the current wind condition, and the wind condition during the first work flight). The second path R2 and the first path R1 may be different from each other, and the second spray mode and the first spray mode may be the same (e.g., each of the first spray mode and the second spray mode is a mode to constantly perform spraying). The second path R2 and the first path R1 may be the same, and the second spray mode and the first spray mode may be different from each other (e.g., the first spray mode is a mode to constantly perform spraying, and the second spray mode is a mode to intermittently perform spraying at a necessary position).

Then, the second flight control unit 15 causes the unmanned aerial vehicle 1 to perform the second work flight with the determined second work flight behavior (step S006).

The acquisition unit 12 acquires, as the environment information 30, the wind condition in the work target region E and the image input from the camera 6 during execution of the second work flight. The sprayed chemical control unit 17 calculates the effective spray amount V3 of the second work flight, based on the acquired environment information 30. Then, the map creation unit 19 updates the spray map M, based on the calculated effective spray amount V3.

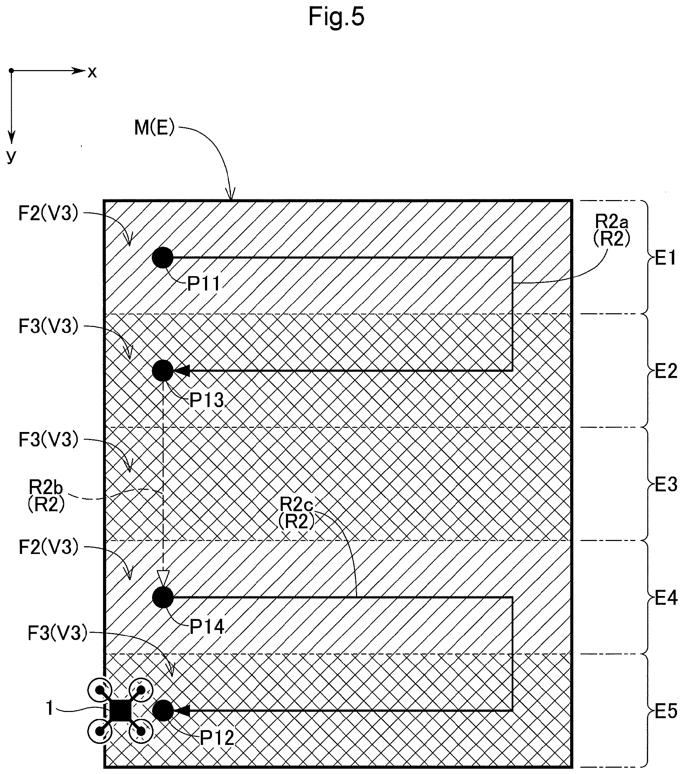

This will be described in detail. Assume that no wind blows during the second work flight. The chemical sprayed during the flight along the path R2a is sprayed to the region E1 and the region E2. The chemical sprayed during the flight along the path R2c is sprayed to the region E4 and the region E5. That is, the effective spray amount V3 by the second work flight is 50% in each of the regions E1, E2, E4, and E5, and zero in the region E3. Then, the accumulated value of the effective spray amount V3 at the end of the second work flight is 50% in each of the regions E1 and E4, and 100% in each of the regions E2, E3, and E5. The map creation unit 19 updates the spray map M, based on the calculated effective spray amounts V3. The updated spray map M is shown in FIG. 5, in which the region F2 (a region in which the effective spray amount V3 is about 50% relative to the target spray amount V1) is assigned to each of the regions E1 and E4, and the region F3 (a region in which the effective spray amount V3 is about 100% relative to the target spray amount V1) is assigned to each of the regions E2, E3, and E5.

Whether or not the chemical sprayed in the work target region E has reached the target spray amount V1 is determined (step S007). More specifically, the control device 11 determines whether or not the accumulated value of the effective spray amounts V3 has reached 100% in the entire work target region E. If the target spray amount V1 has been reached (step S007: YES), the operation ends.

As shown in FIG. 5, the effective spray amount V3 in each of the regions E1 and E4 is 50% of the accumulated value at the end of the second work flight, and therefore the chemical sprayed in the work target region E has not reached the target spray amount V1. If the target spray amount V1 has not been reached (step S007: NO), the work flight is performed again. First, the acquisition unit 12 acquires the environment information 30 (step S004).

### Work Flight Along Third Path

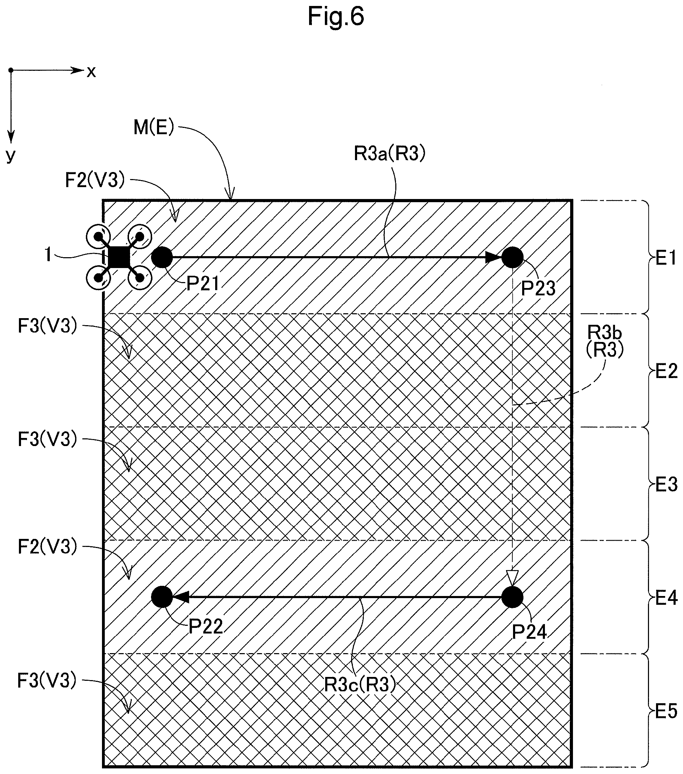

FIG. 6 shows a spray map M when the unmanned aerial vehicle 1 is located at P21 before the start of the third work flight. The third flight control unit 16 calculates the wind velocity and the wind direction in the work target region E, based on the signal from the wind sensor 5.

The third flight control unit 16 determines a third flight behavior (step S005). More specifically, the third flight control unit 16 determines the third work flight behavior, based on the current wind status and the spray map M.

This will be described in detail. The third flight control unit 16 generates a third path R3 from the point P21 to a point P22. In FIG. 6, the spray map M shows the position of the unmanned aerial vehicle 1, and the generated third path R3.

The third flight control unit 16 determines the current wind condition, or in other words, the wind condition at the start of the third work flight, based on the environment information 30. Assume that no wind is currently blowing.

The effective spray amount V3 in each of the regions E1 and E4 is 50%, and the effective spray amount V3 in each of the regions E2, E3, and E5 is 100%.

Accordingly, the third flight control unit 16 generates a path R3a from the point P21 to a point P23 in such a manner as to pass through the region E1. Note that the third flight control unit 16 determines a third spray mode in such a manner as to spray the chemical during the flight along the path R3a.

The third flight control unit 16 generates a path R3b from the point P23 to a point P24 in such a manner as to skip the regions E2 and E3. Note that the third flight control unit 16 determines a third spray mode in such a manner as not to spray the chemical during the flight along the path R3b.

The third flight control unit 16 generates a path R3c from the point P24 to the point P22 in such a manner as to pass through the region E4. Note that the third flight control unit 16 determines a third spray mode in such a manner as to spray the chemical during the flight along the path R3c.

Then, the third flight control unit 16 causes the unmanned aerial vehicle 1 to perform the third work flight with the determined third work flight behavior (step S006).

The acquisition unit 12 acquires, as the environment information 30, the wind condition in the work target region E and the image input from the camera 6 during execution of the third work flight. The sprayed chemical control unit 17 calculates the effective spray amount V3 of the third work flight, based on the acquired environment information 30. Then, the map creation unit 19 updates the spray map M, based on the calculated effective spray amount V3.

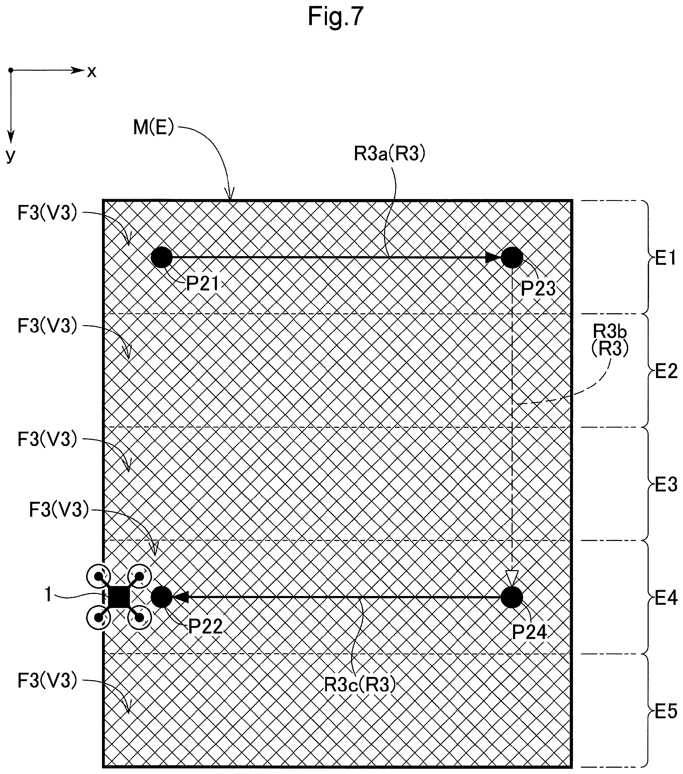

This will be described in detail. Assume that no wind blows during the third work flight. The chemical sprayed during the flight along the path R3a is sprayed to the region E1. The chemical sprayed during the flight along the path R3c is sprayed to the region E4. That is, the effective spray amount V3 by the second work flight is 50% in each of the regions E1 and E4, and is zero in the other regions. Then, the accumulated value of the effective spray amounts V3 at the end of the third work flight is 100% in all of the regions. The map creation unit 19 updates the spray map M, based on the calculated effective spray amounts V3. The updated spray map M is shown in FIG. 7, in which the region F3 (a region in which the effective spray amount V3 is about 100% relative to the target spray amount V1) is assigned to all of the regions.

Whether or not the chemical sprayed in the work target region E has reached the target spray amount V1 is determined (step S007). Since the accumulated value of the effective spray amounts V3 has reached 100% in the entire work target region E (step S007: YES), the operation ends.

### Alternative Embodiments

The present invention is not limited to the above-described embodiment. For example, the present invention may be configured as described in the following alternative embodiments. In the alternative embodiments described below, the same configurations as those of the above embodiment are denoted by the same reference numerals and signs as those of the above example.
(1) The mode for determining the flight behavior on the basis of the environment information 30 is not limited to the above-described example. For example, the flight behavior may be determined based on terrain data of the work target region E indicated by the environment information 30, terrain data of the surrounding area of the work target region E, a result of past chemical spraying in the work target region E, a result of past chemical spraying in the surrounding area of the work target region E, and the like. With these pieces of information, it is possible to estimate a region reached by the chemical sprayed from the chemical spraying device 3 of the unmanned aerial vehicle 1. For example, the direction or the strength of the wind that blows constantly can be estimated from the terrain of the work target region E or the terrain of the surrounding area of the work target region E, and the flight behavior can be determined based on a result of the estimation. In addition, the relationship between the flight path and the position reached by the chemical can be estimated from a result of past chemical spraying, and the flight behavior can be determined based on a result of the estimation.
(2) In the above-described embodiment, the first flight control unit 14 and the second flight control unit 15 cause the same unmanned aerial vehicle 1 to perform a work flight. The present invention is not limited thereto, and the first flight control unit 14 may cause a first unmanned aerial vehicle to perform a work flight with the first work flight behavior, and the second flight control unit 15 may cause a second unmanned aerial vehicle different from the first unmanned aerial vehicle to perform a work flight with the second work flight behavior.
(3) The first flight control unit 14 may fly the unmanned aerial vehicle 1 at a predetermined height from the work target region E as the first work flight behavior, and the second flight control unit 15 may fly the unmanned aerial vehicle 1 at a height from the work target region E that is different from the first work flight behavior as the second work flight behavior.
(4) In the above-described embodiment, the control device 11 includes the first flight control unit 14, the second flight control unit 15, and the third flight control unit 16. One functional unit that has the functions of these functional units may be provided. Note that, in the present embodiment, a plurality of work flights are performed, and the operation ends in response to the spray amount of the chemical reaching the target spray amount V1. The number X of work flights varies. In this sense, the control device 11 need not include the third flight control unit 16. The control device 11 may further include a functional unit configured to control the work flight at the fourth time and work flights at subsequent times.
(5) The first flight control unit 14 may fly the unmanned aerial vehicle 1 at a predetermined speed as the first work flight behavior, and the second flight control unit 15 may fly the unmanned aerial vehicle 1 at a speed different from the speed of the first work flight behavior as the second work flight behavior.
(6) In the above-described embodiment, the work spray amount V2 is automatically calculated by the sprayed chemical control unit 17. The present invention is not limited thereto, and the work spray amount V2 may be artificially set in advance.
(7) The work target region E may have any shape. For example, the work target region E may be a trapezoidal shape or the like.
(8) In the above-described embodiment, the control device 11 includes the map creation unit 19. The present invention is not limited thereto, and the management device 21 may include the map creation unit 19.
(9) The control device 11 need not include the map creation unit 19. In this case, the effective spray amount V3 is associated with the latitude and the longitude of the work target region E.
(10) In the above-described embodiment, the control device 11 is provided in the unmanned aerial vehicle 1. The present invention is not limited thereto, and the control device 11 may be provided outside the unmanned aerial vehicle 1. In this case, the management device 21 may be capable of transmitting and receiving information to and from the control device 11 and the unmanned aerial vehicle 1 via wired communication or wireless communication.
(12) The spray map M shows the region F1, the region F2, and the region F3 as the effective spray amount V3. The present invention is not limited thereto, and the effective spray amount V3 may be represented in a different form. For example, the number of regions representing the effective spray amount V3 may be 2 or less, or greater than 3.
(13) The management device 21 may include a display unit that is a monitor that displays predetermined information, and the spray map M may be displayed on the display unit.
(14) The first flight control unit 14 may be configured to determine the first work flight behavior, based on the environment information 30. For example, the first flight control unit 14 determines the first path R1, based on the current wind amount and wind direction.
(15) The spray amount (spray amount per unit time, concentration, etc.) of the chemical from the chemical spraying device 3 may be modifiable. The control device 11 may modify the spray amount (specifically, the work spray amount V2) of the chemical, based on the environment information 30. Modification may be performed before execution of a work flight (e.g., before execution of the work flight on the second time), or may be performed part-way through a work flight.

### Industrial Applicability

The present invention is applicable to a chemical spraying system that causes an unmanned aerial vehicle to spray a chemical to a work target region.

### Description of Reference Signs

1: Unmanned aerial vehicle
3: Chemical spraying device
11: Control device
12: Acquisition unit
14: First flight control unit
15: Second flight control unit
16: Third flight control unit
30: Environment information
E: Work target region
R1: First path
R2: Second path

## Claims

1. A chemical spraying system configured to cause at least one unmanned aerial vehicle to spray a chemical to a work target region, the chemical spraying system comprising:
the at least one unmanned aerial vehicle including a chemical spraying device; and
a control device configured to control the at least one unmanned aerial vehicle, wherein
the control device includes:
an acquisition unit configured to acquire environment information indicating an environment of the work target region;
a first flight control unit configured to cause the at least one unmanned aerial vehicle to perform a work flight with a first work flight behavior; and
a second flight control unit configured to determine a second work flight behavior, based on the environment information, and cause the at least one unmanned aerial vehicle to perform a work flight with the second work flight behavior.

2. The chemical spraying system according to claim 1, wherein
the first flight control unit operates the chemical spraying device while flying the at least one unmanned aerial vehicle along a first path as the first work flight behavior, and
the second flight control unit generates, based on the environment information, a second path as the second work flight behavior in such a manner as to be different from the first path, and operates the chemical spraying device while flying the at least one unmanned aerial vehicle along the second path.

3. The chemical spraying system according to claim 1, wherein
the first flight control unit operates the chemical spraying device, based on a first spray mode as the first work flight behavior, while flying the at least one unmanned aerial vehicle along a first path as the first work flight behavior, and
the second flight control unit generates, based on the environment information, a second spray mode as the second work flight behavior in such a manner as to be different from the first spray mode, and operates the chemical spraying device, based on the second spray mode, while flying the at least one unmanned aerial vehicle along a second path as the second work flight behavior.

4. The chemical spraying system according to claim 1, wherein
the first flight control unit operates the chemical spraying device, based on a first spray mode as the first work flight behavior, while flying the at least one unmanned aerial vehicle along a first path as the first work flight behavior, and
the second flight control unit: generates, based on the environment information, a second path as the second work flight behavior in such a manner as to be different from the first path; generates, based on the environment information, a second spray mode as the second work flight behavior in such a manner as to be different from the first spray mode; and operates the chemical spraying device, based on the second spray mode, while flying the at least one unmanned aerial vehicle along the second path.

5. The chemical spraying system according to claim 1, wherein
the acquisition unit acquires, as the environment information, at least one of: a wind condition in the work target region; a terrain of a surrounding area of the work target region; a result of past chemical spraying in the work target region; and a result of past chemical spraying in the surrounding area of the work target region.

6. The chemical spraying system according to claim 1, wherein
the control device includes a third flight control unit configured to determine a third work flight behavior, based on the environment information, and cause the at least one unmanned aerial vehicle to perform a work flight with the third work flight behavior.

7. The chemical spraying system according to claim 1, wherein
the at least one unmanned aerial vehicle includes a first unmanned aerial vehicle and a second unmanned aerial vehicle,
the first flight control unit causes the first unmanned aerial vehicle to perform a work flight with the first work flight behavior, and
the second flight control unit causes the second unmanned aerial vehicle to perform a work flight with the second work flight behavior.
